# EUROPEAN PATENT SPECIFICATION

(11) **EP 1 889 772 B1**
(45) Date of publication and mention of the grant of the patent: **27.06.2012**
(21) Application number: 07015207.9
(22) Date of filing: 02.08.2007
(51) Int. Cl.: B62B 7/10, B62B 9/18

(54) **Folding mechanism for a baby stroller**
Zusammenklappbarer Mechanismus für einen Kinderwagen
Mécanisme de pliage d'une poussette

(30) Priority: 17.08.2006 CN 200620063190 U
(43) Date of publication of application: 20.02.2008
(73) Proprietor: Lerado (Zhong Shan) Industrial Co., Ltd., Zhong Shan City Guangdong (CN)
(72) Inventor: Yeh, Chuan-Ming, Chuayi City 600 (TW); Hou, Hung-Chung, Taibao City Chiayi County 612 (TW)
(74) Representative: Wagner, Bernhard Peter

(56) References cited:
- DE-U1-202005 013 397
- FR-A- 2 708 550
- US-A- 5 876 057
- US-A1- 2003 057 680
- US-A1- 2005 098 981

## Description

### BACKGROUND OF THE INVENTION

### FIELD OF THE INVENTION

The present invention relates to a folding control mechanism for a collapsible baby stroller and in particular, to a mechanism controlling an articulated joint installed on a front wheel strut of a baby stroller which is capable of changing progressing direction by shifting the direction of its push arms.

### DESCRIPTION OF THE RELATED ART

A conventional baby stroller generally has a pair of push arms installed at the rear side and accommodates a baby sitting therein. As the baby stroller pusher and the baby both face front, the pusher can not look over the facial expression of the baby; and therefore, the pusher must frequently stop the baby stroller and walk to the front of the baby for taking a look, this is quite inconvenient. Moreover, the baby sitting in the baby stroller can not see the pusher, and thereby feels unsafe, the baby hence tends to cry.

A kind of conventional baby stroller of which the direction of the push arms is changeable is quite welcome by customers. The mechanism for keeping the push arms in a chosen direction is mounted on the lower end of the push arms; however the locking members as the one disclosed in U.S. Patent No. 5,876,057 for fixing a collapsible stroller in an erected position are similarly mounted on the lower ends of the push arms.

Therefore, two kinds of mechanisms are crowded in one place. Accordingly, the design of a collapsible stroller that equipped with a direction changeable push arms shall become very complex and may lack of strength and mechanical reliability.

With this in mind, the present invention aims at providing a folding control mechanism for manipulating an articulate joint mounted on a front wheel strut of a collapsible stroller in which the direction of the push arms is changeable
US 2005/0098981 A1 discloses a folding control mechanism for a baby stroller comprising a latching member operatively and slidably received in a pivotal base and biased by an elastic element to keep the pivotal base in a non-rotatable state so as to keep a handle tube and a front leg tube of a frame in a substantial straight configuration. A folding actuator is operatively connected with the stroller frame and a connecting member is connected between the latching member and the folding actuator. In particular, the latching member that is formed as a latch finger extending in a lateral direction of the handle tube is received in a lower joint that is pivotally connected to an outer joint fixed to the front leg tube. The outer joint has an inner wall containing an integrated anchor section. If the handle tube and the front leg tube are in a substantial straight configuration the latching member is engaged within the anchor section so as to keep the pivotal base in a non-rotatable state. If the baby stroller needs to be folded, the latching member is pulled in a longitudinal direction upward to disengage it from the anchor section against the biasing force of the elastic element so that the handle tube and the front leg tube can be rotated relatively to each other.
US 5,876,057 discloses another folding control mechanism for a baby stroller having a latching member consisting of a post that extends in a lateral direction of an upper segment of a frame. The post is biased by a spring into a latching position so as to keep the latching member in a locking position to keep a pivotal base in a non-rotatable state. The latching member can be moved upwardly by means of a folding actuator that is connected to the latching member through a strip. A lower part of the pivotal base is provided with a recess. If the front wheel strut is in a substantial straight configuration the post forming the latching member is engaged within the recess so as to keep the lower part of the pivotal base in a non-rotatable state relative to an upper part thereof. For releasing the pivotal base from the non-rotatable state, the post is pulled in the longitudinal direction of the upper segment of the frame.
US 2003/0057680 A1 is concerned with a foldable stroller and discloses a folding control mechanism having as latching member a sliding element that can be moved in a longitudinal direction of a handle unit that is pivotally connected to a front wheel unit by means of a guideway member having an integral pivot portion and a positioning member having lugs, wherein the lugs includes pivot holes for receiving pivot pins that also extend through corresponding pivot holes in the integral pivot portion of the guideway member. To keep the front wheel unit and the handle unit in a substantial straight configuration, the latching member engages a positioning surface of a slide-engaging block. To release the front wheel unit and the handle unit from the non-rotatable state, the latching member, e.g. the sliding element is moved in the longitudinal direction of the handle unit upwardly by the actuator that is connected to the sliding element by a connecting element.
DE 20 2005 013 397 U1 discloses another foldable stroller having a folding control mechanism including a sliding element provided with a latching member. The sliding element is received in the upper portion of a front wheel strut to which the lower end of a handle unit is pivotally connected. The sliding member and therefore the latching member can be moved in a longitudinal direction of the upper part of the front wheel strut when driven by an actuator. The latching member is biased into a locking position for engaging with a locking portion a connecting element mounted to the lower end of the handle unit.

### SUMMARY OF THE INVENTION

The object underlying the present invention is to provide a folding control mechanism for a baby stroller having a relative simple structure and providing strength and mechanical reliability.

This object is achieved by the folding control mechanism according to claim 1.

For achieving such a goal, the present invention provides a folding control mechanism for control the folding of a collapsible stroller frame as defined in claim 1. The collapsible stroller frame has a pair of pivotal bases for pivotally connecting with a pair of front wheel struts, a pair of rear wheel struts and a pair of push arms, a seat supporting rack pivotally connected with a seatback rack above and between the struts, and a downside connecting rack connected between the lower ends of the struts. The push arms can be shifted between a forward and a rearward direction, so as to facilitate a pusher of the stroller to change the pushing direction.

Each of the front wheel struts includes at least an upper segment and a lower segment both of which are connected with a pivotable base in the form of articulated joint controlled by a folding control mechanism of the present invention. The pivotable base has a first connecting portion connected with the upper segment, a second connecting portion connected with the lower segment, and a pivotable guiding element pivotally connected with the first connecting portion and the second connecting portion.

The folding control mechanism may comprise a folding actuator operatably connected with the push arms, a driving member operatably connected on the pivotable guiding element and biased by a biasing member in one direction, a latching member slidably installed on and guided by the pivotable guiding element, a resilient member installed in the pivotable guiding element for biasing the latching member toward a positioning hole defined by the wall of the lower segment of the front wheel strut, a first connecting member threaded through the push arms, a second connecting member threaded though the upper segment of the front wheel strut for connecting between the folding actuator and the driving member for driving the latching member to disengage from the positioning hole.

To fold the baby stroller frame, the pusher can manipulate the folding actuator to disengage from the positioning hole, and then to fold the baby stroller frame onto a relative compact collapsed position.

### BRIEF DESCRIPTION OF THE DRAWINGS

The present invention will become more fully understood from the detailed description given hereinbelow and the accompanying drawings, which are given by way of illustration only, and thus are not limitative of the present invention, and wherein:

FIG. 1 is a perspective view showing a folding control mechanism of the present invention embodied with a collapsible baby stroller.

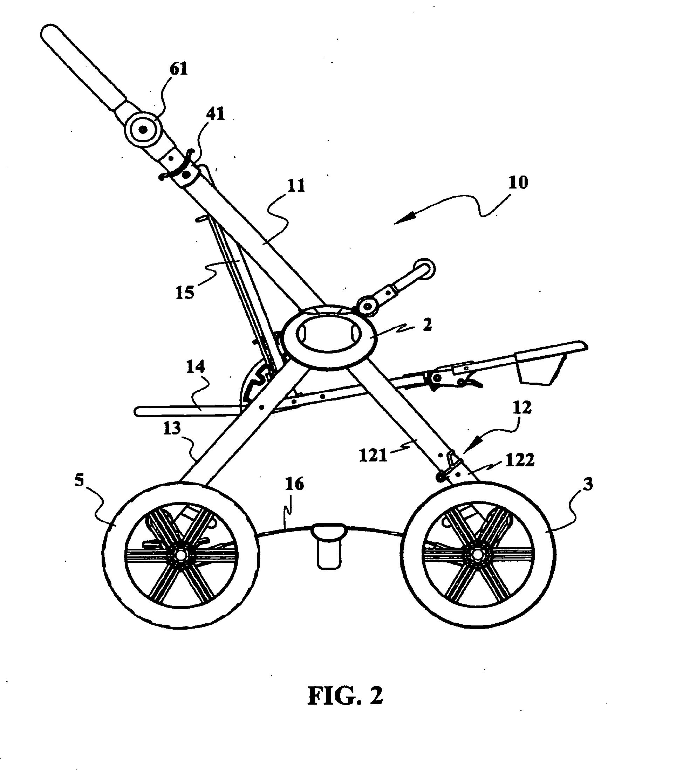

FIG. 2 is a side view of the collapsible baby stroller being equipped with the folding control mechanism of the present invention.

FIG. 3 is a schematic view showing the collapsible baby stroller equipped with the folding control mechanism of the present invention as being folded in a collapsed position.

FIG. 4 is a partial exploded perspective view showing the folding control mechanism of the present invention associated with a push arm direction control mechanism, both of which are embodied with a collapsible stroller frame.

FIG. 5 is a schematic view showing the direction of the push arms of the collapsible baby stroller of FIG. 3 can be shifted from one direction to another.

FIG. 6 is a schematic view showing the push arms of the collapsible baby stroller of FIG. 3 being shifted to an opposite direction.

FIG. 7 is a schematic view showing the manipulation of the folding control mechanism of the present invention associated with the collapsible baby stroller of FIG. 1.

FIG. 8 is an enlarged cross-sectional view for partially showing the folding control mechanism of the present invention.

FIG. 9 is a schematic view for showing the collapsible baby stroller of FIG. 1 in a collapsible state while the latching member of the folding control mechanism is disengaged from the positioning hole of the lower segment of the front wheel strut.

FIG. 10 is an enlarged cross-sectional view for partially showing an alternate embodiment of the folding control mechanism of the present invention.

### DETAILED DESCRIPTION OF THE PREFERRED EMBODIMENTS

Referring to FIG.S 1 to 4, a folding control mechanism 6 according to the present invention is embodied with a collapsible stroller frame 10.

The collapsible stroller frame 10 has a pair of pivotal bases 2 for pivotally connecting with a pair of front wheel struts 12, a pair of rear wheel struts 13 and a pair of push arms 11, a seat supporting rack 14 pivotally connected with a seatback rack 15 above and between the struts 12 and 13, and a downside connecting rack 16 pivotally connected between the lower portions of the struts 12 and 13. A plurality of front wheels 3 and rear wheels 5 are pivotally connected with the lower ends of the collapsible stroller frame 10 to facilitate the traveling of the stroller on a variety of terrain.

The push arms 4 of this embodiment can be shifted between a forward and a rearward direction, so as to facilitate a pusher to change the pushing direction of the collapsible stroller frame 10.

Preferably, the downside connecting rack 16 can be made of spring plate in an arched configuration for providing a shock absorbing function while the struts 12 and 13 is get bumped on the road.

Each of the front wheel struts 12 includes at least an upper segment 121 and a lower segment 122 both of which are connected with a pivotable base 120 in the form of articulated joint controlled by the folding control mechanism 6 of the present invention.

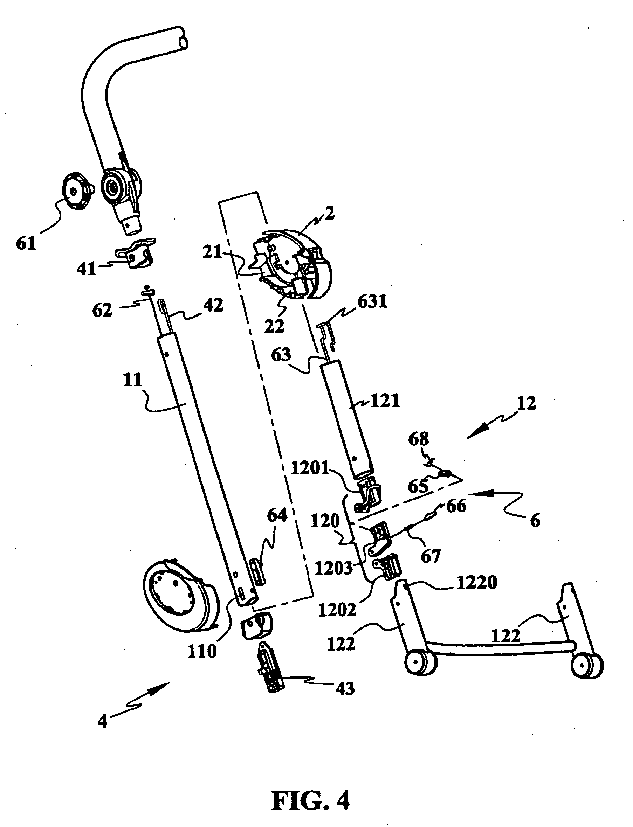

Referring to FIG.4, the pivotable base 120 has a first connecting portion 1201 connected with the upper segment 121, a second connecting portion 1202 connected with the lower segment 122, and a pivotable guiding element 1203 pivotally connected with the first connecting portion 1201 and the second connecting portion 1202.

The folding control mechanism 6 according to the present invention may comprise a folding actuator 61, a first connecting member 62, a second connecting member 63, a slider 64, a driving member 65, a latching member 66 and a resilient element 67.

The folding actuator 61 is operatably connected with the push arms 11 for driving the driving member 65 to move latching member 66 through the connection of the first connecting member 62, a second connecting member 63 and the slider 64.

The folding actuator 61 can be embodied as a rotatable knob or a slidable hooked sleeve (not shown) or a hooked element (not shown), which has one end connected with the first connecting member 62. The first connecting member 62 is threaded through the push arm 11, and the second connecting member 63 is threaded through the upper segment 121 of the front wheel strut 12, both of which are connected by the slider 64.

The slider 64 is slidably mounted at the lower end of the push arms 11, having one end connected with the first connecting member 62, and an opposite end connected with the upper end 631 of the second connecting member 63. Preferably, the slider 64 can be formed with a protruded portion confined within a slot 110 defined at the lower end of the push arms 11 for limiting the sliding distance of the slider 64.

The driving member 65 is pivotally connected on the pivotable guiding element 1203 and biased by the biasing member 68 in one direction. For instance, the biasing member 68 can be embodied as a torsion spring or a leaf spring.

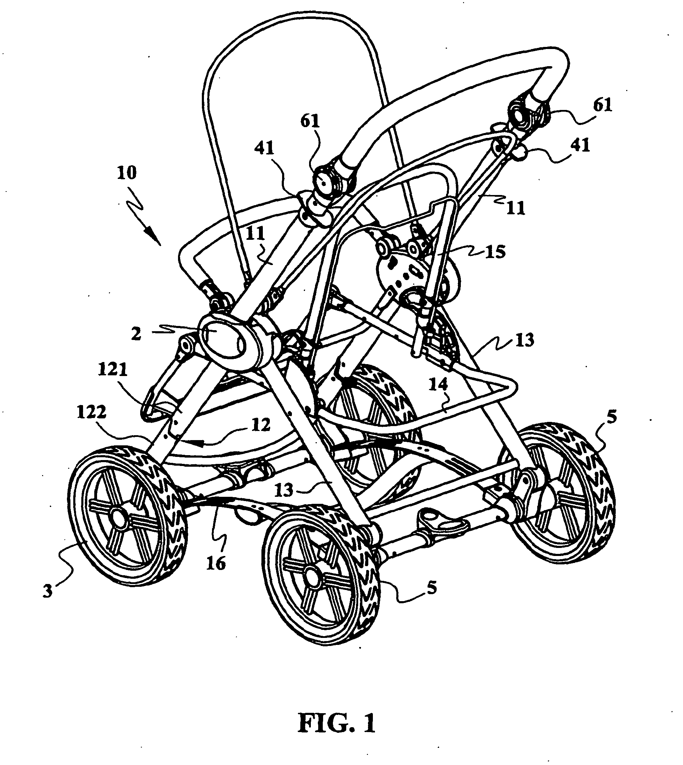

The latching member 66 is biased by the resilient element 67 slidably installed on and guided by the pivotable guiding element 1203 and has a driven portion for engaging with the driving member 65, and one end releaseably engaged with a positioning hole 1220 that is located at the upper end of the lower segment 122 of the front wheel strut 12, so as to keep the pivotal base 120 in a nonrotatable state; thereby to keep the upper end 121 and the lower end 122 of the front wheel strut 12 in a substantial straight configuration as shown in FIG. 1.

A push arm direction control mechanism 4 comprises a push arm direction control element 41, a third connecting member 42 and a slidably locking member 43. The push arm direction control element 41 can be embodied as a knob, a hooked sliding sleeve, that is movably or slidably connected with the push arms 11 and has one end connected with the slidably locking member 43 via the third connecting member 42.

Further, the pivotal bases 2 is can be formed with a first positioning slot 21 and a second positioning slot 22. The slidably locking member 43 is biased by a resilient member (not shown) to engage with either the first positioning slot 21 or the second positioning slot 22, so as to keep the push arms 11 in either a forward direction or a rearward direction of the stroller.

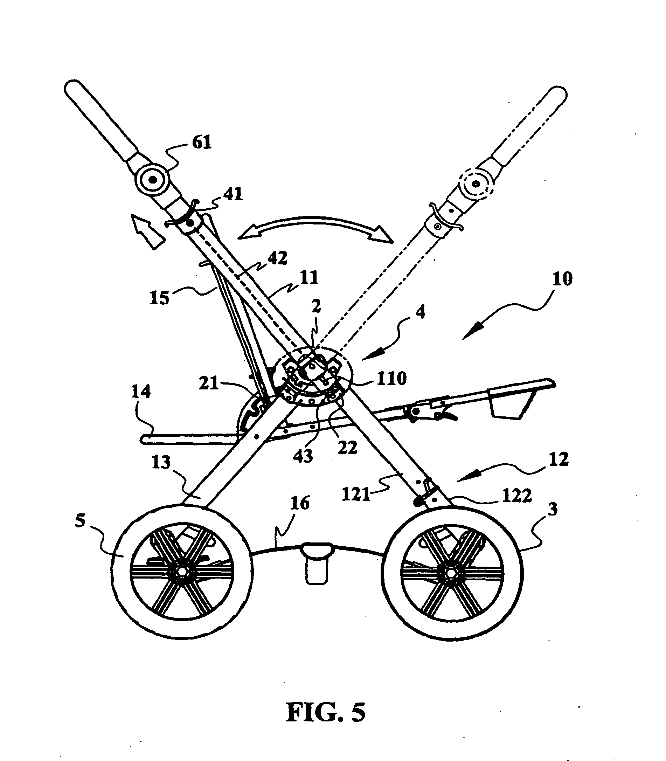

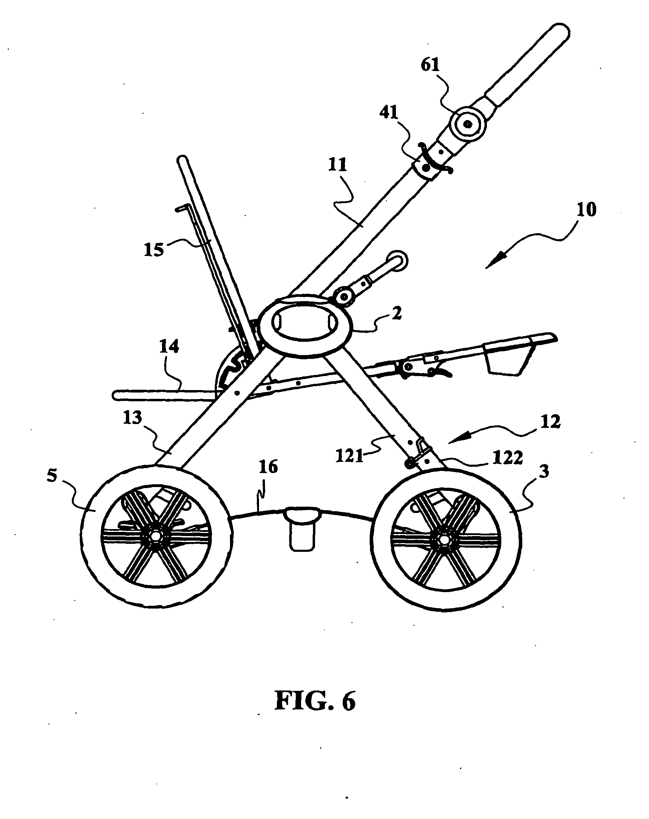

The push arms 11 can be shifted between the forward and the rearward direction by pulling the push arm direction control element 41 to disengage the slidably locking member 43 from the slots 21 or 22, so as to facilitate the pusher to rotate the push arms 11 and change the pushing direction of the collapsible stroller frame 10 as shown in FIGS. 5 and 6.

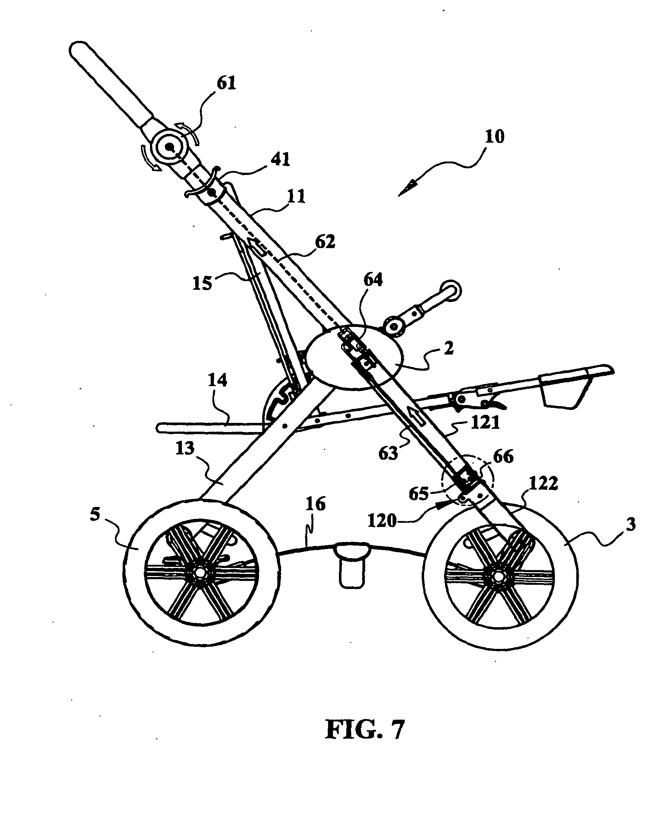

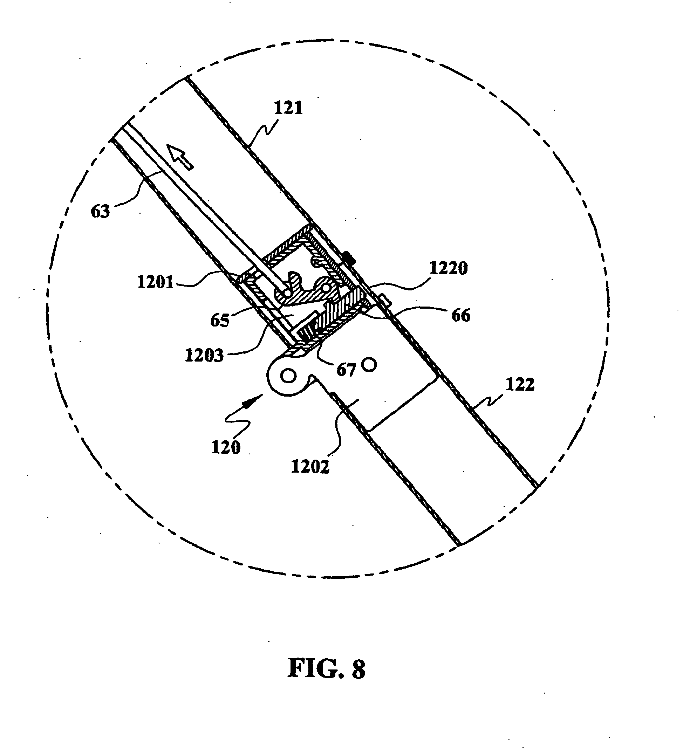

Referring to FIGS. 7 and 8, when the folding actuator 61 is manipulated by rotation, the driving member 65 drives the latching member 66 in a direction against the biasing of the resilient element 67 thereby to disengage the latching member 66 from the positioning hole 1220, so as to release the nonrotatable state between the upper end 121 and the lower end 122 of the front wheel strut 12, thereby to transfer the collapsible stroller frame 10 into a collapsible state.

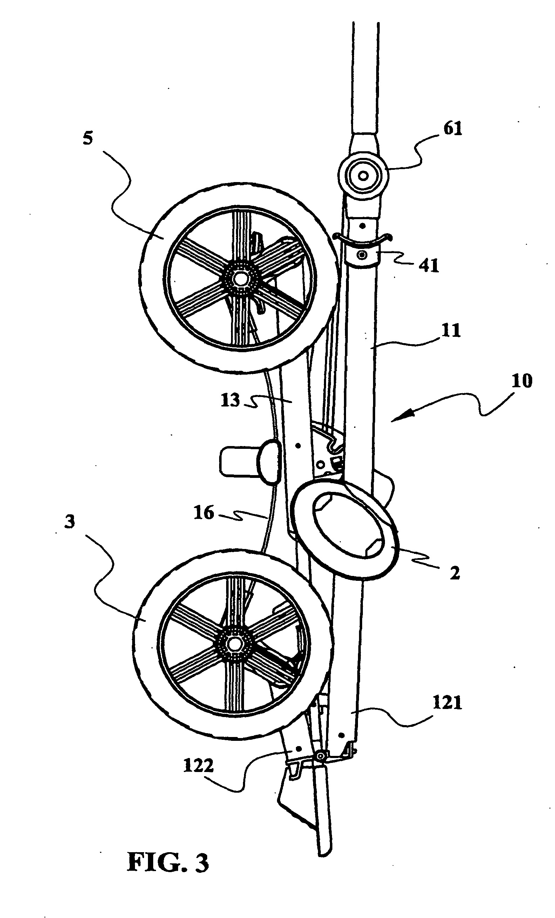

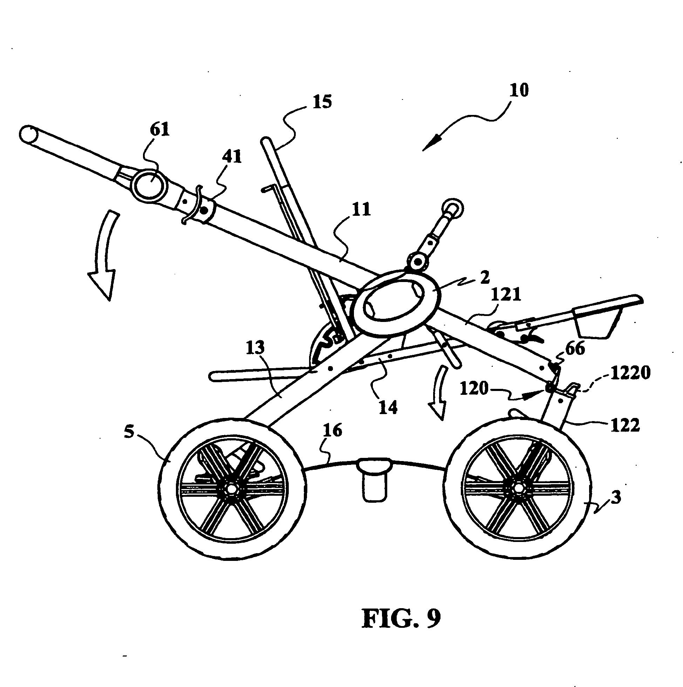

Referring to FIG. 9, when the latching member 66 is disengaged from the positioning hole 1220, the collapsible stroller frame 10 can be folded as a collapsible position as shown in FIG. 3.

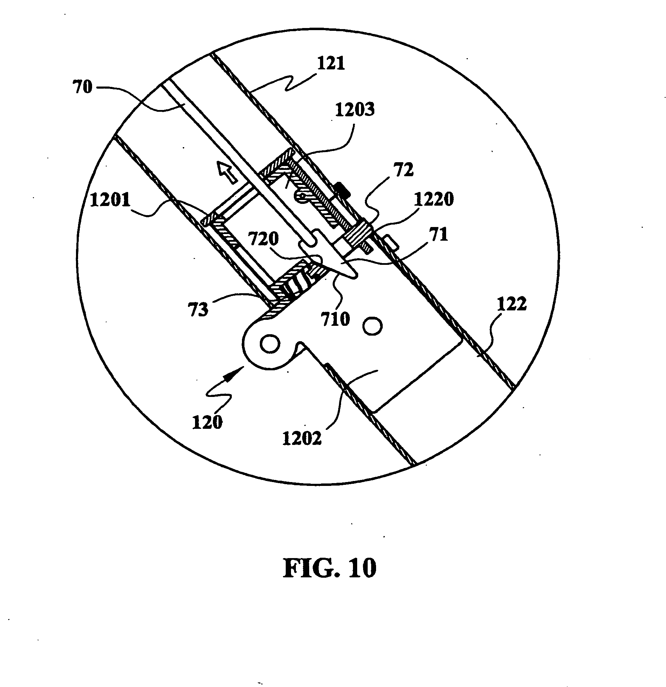

Referring to FIG. 10, a driving member 71 of an alternate embodiment of the present invention can be formed with a slope 710 and driven by a second connecting member 70 against a biasing force of a resilient element (not shown). The latching member 72 is formed with a slope 720 for slidably contacting with the slope 710 so as to be driven by the driving member 71 to disengage from the positioning hole 1220, so that to make the collapsible stroller frame 10 to transfer into a collapsible state as being depicted in FIG. 9.

## Claims

1. A folding control mechanism (6) for a baby stroller, the baby stroller having a collapsible stroller frame (10) comprising at least a pair of front wheel struts (12) consisted of an upper segment (121) and a lower segment (122) both of which connected by a pivotal base (120), and the folding control mechanism (6) comprising:
- a latching member (66, 72) operatively and slidably received in the pivotal base (120) and biased to keep the pivotal base (120) in a nonrotatable state, so as to keep the upper segment (121) and the lower segment (122) of the front wheel strut (12) in a substantial straight configuration;
- a folding actuator (61) operatively connected with the collapsible stroller frame; and
- a connecting member (63) operatively connected between the latching member (66, 72) and the folding actuator (61) for driving the latching member (66, 72) for releasing the pivotal base (120) from the nonrotatable state;
**characterized in that**
- one end of the latching member (66, 72) is engaged with a positioning hole (1220) that is located at the upper end of the lower segment (122) of the front wheel strut (12), so as to keep the pivotal base (120) in the nonrotatable state; and
- a driving member (65, 71) movably received in the pivotal base (120) and connected to the folding actuator (61) is provided between the connecting member (63) and the latching member (66, 72) to move the latching member (66, 72) in a lateral direction of the front wheel strut (12) and perpendicularly to the pivot axis of the pivotal base for disengaging from the positioning hole (1220) for releasing the pivotal base (120) from the nonrotatable state.

2. The folding control mechanism of claim 1, wherein the pivotal base (120) comprises:
- a first connecting portion (1201) connected with the upper segment (121) of the front wheel strut (12);
- a second connecting portion (1202) connected with the lower segment (122) of the front wheel strut (12); and
- a pivotable guiding element (1203) pivotally connected between the first connecting portion (1201) and the second connecting portion (1202).

3. The folding control mechanism of claim 2, wherein the latching member (66) is operatively and slidably received in the pivotable guiding element (1203) and biased by a resilient element (67).

## Patentansprüche

1. Klappbedienungsmechanismus (6) für einen Kinderwagen, wobei der Kinderwagen einen zusammenklappbaren Kinderwagenrahmen (10) besitzt, der mindestens ein Paar Vorderradstützstäbe (12), die aus einem oberen Abschnitt (121) und einem unteren Abschnitt (122) bestehen, die beide durch eine Gelenkbasis (120) verbunden sind, umfasst, und wobei der Klappbedienungsmechanismus (6) Folgendes umfasst:
- eine Verriegelungseinheit (66, 72), die funktionstechnisch und gleitend in der Gelenkbasis (120) aufgenommen ist und vorbelastet ist, um die Gelenkbasis (120) in einem nicht drehbaren Zustand zu halten, um so den oberen Abschnitt (121) und den unteren Abschnitt (122) des Vorderradstützstabs (12) in einer im Wesentlichen geraden Konfiguration zu halten;
- einen Klappaktor (61), der funktionstechnisch mit dem zusammenklappbaren Kinderwagenrahmen verbunden ist; und
- eine Verbindungseinheit (63), die funktionstechnisch zwischen der Verriegelungseinheit (66, 72) und dem Klappaktor (61) verbunden ist, um die Verriegelungseinheit (66, 72) zum Freigeben der Gelenkbasis (120) aus dem nicht drehbaren Zustand anzutreiben;
**dadurch gekennzeichnet, dass**
- ein Ende der Verriegelungseinheit (66, 72) in ein Positionierungsloch (1220) eingerastet ist, das sich am oberen Ende des unteren Abschnitts (122) des Vorderradstützstabs (12) befindet, um so die Gelenkbasis (120) in einem nicht drehbaren Zustand zu halten; und
- eine Antriebseinheit (65, 71), die beweglich in der Gelenkbasis enthalten ist und mit dem Klappaktor (61) verbunden ist, zwischen der Verbindungseinheit (63) und der Verriegelungseinheit (66, 72) vorgesehen ist, um die Verriegelungseinheit (66, 72) in einer lateralen Richtung zum Vorderradstützstab (12) und senkrecht zur Drehachse der Gelenkbasis zu bewegen, um aus dem Positionierungsloch (1220) auszuklinken, um die Gelenkbasis (120) aus dem nicht drehbaren Zustand freizugeben.

2. Klappbedienungsmechanismus nach Anspruch 1, wobei die Gelenkbasis (120) Folgendes umfasst:
- einen ersten Verbindungsabschnitt (1201), der mit dem oberen Abschnitt (121) des Vorderradstützstabs (12) verbunden ist;
- einen zweiten Verbindungsabschnitt (1202), der mit dem unteren Abschnitt (122) des Vorderradstützstabs (12) verbunden ist; und
- ein schwenkbares Führungselement (1203), das schwenkbar zwischen dem ersten Verbindungsabschnitt (1201) und dem zweiten Verbindungsabschnitt (1202) verbunden ist.

3. Klappbedienungsmechanismus nach Anspruch 2, wobei die Verriegelungseinheit (66) funktionstechnisch und gleitend in dem schwenkbaren Führungselement (1203) aufgenommen ist und durch ein Federelement (67) vorbelastet ist.

## Revendications

1. Mécanisme de commande de pliage (6) pour une poussette de bébé, la poussette de bébé ayant un châssis de poussette escamotable (10) comprenant au moins une paire de le montant de roue avant (12) constitué d'un segment supérieur (121) et d'un segment inférieur (122), qui sont tous les deux connectés par une base pivotante (120), et le mécanisme de commande de pliage (6) comprenant :
- un élément de verrouillage (66, 72) reçu fonctionnellement en coulissement dans la base pivotante (120) et sollicité pour maintenir la base pivotante (120) dans une situation non rotative, afin de maintenir le segment supérieur (121) et le segment inférieur (122) du montant de roue avant (12) dans une configuration sensiblement rectiligne ;
- un actionneur de pliage (61) fonctionnellement connecté au châssis de poussette escamotable ; et
- un élément de connexion (63) fonctionnellement connecté entre l'élément de verrouillage (66, 72) et l'actionneur de pliage (61) pour entraîner l'élément de verrouillage (66, 72) afin de libérer la base pivotante (120) de la situation non rotative ;
**caractérisé en ce que**
- une extrémité de l'élément de verrouillage (66, 72) est engagée avec un trou de positionnement (1220) qui est situé à l'extrémité supérieure du segment inférieur (122) du montant de roue avant (12), de manière à maintenir la base pivotante (120) dans la situation non rotative ; et
- un élément d'entraînement (65, 71) reçu de façon mobile dans la base pivotante (120) et connecté à l'actionneur de pliage (61) est prévu entre l'élément de connexion (63) et l'élément de verrouillage (66, 72) pour déplacer l'élément de verrouillage (66, 72) dans une direction latérale du montant de roue avant (12) et perpendiculairement à l'axe de pivotement de la base pivotante pour le dégager du trou de positionnement (1220) afin de libérer la base pivotante (120) de la situation non rotative.

2. Mécanisme de commande de pliage selon la revendication 1, dans lequel la base pivotante (120) comprend :
- une première portion de connexion (1201) connectée au segment supérieur (121) du montant de roue avant (12) ;
- une seconde portion de connexion (1202) connectée au segment inférieur (122) montant de roue avant (12) ; et
- un élément de guidage pivotant (1203) connecté en pivotement entre la première portion de connexion (1201) et la seconde portion de connexion (1202).

3. Mécanisme de commande de pliage selon la revendication 2, dans lequel l'élément de verrouillage (66) est reçu fonctionnellement en coulissement dans l'élément de guidage pivotant (1203) et sollicité par un élément élastique (67).
